# FASCICULE DE BREVET EUROPEEN

(11) **EP 2 705 747 B1**
(45) Date de publication et mention de la délivrance du brevet: **19.11.2014**
(21) Numéro de dépôt: 13306225.7
(22) Date de dépôt: 06.09.2013
(51) Int. Cl.: A01K 1/00

(54) **Abri pour animaux**
Schutzhütte für Tiere
Animal shelter

(30) Priorité: 07.09.2012 FR 1258416
(43) Date de publication de la demande: 12.03.2014
(73) Titulaire: Polymoule, 72550 Coulans sur Gee (FR)
(72) Inventeur: Cosnet, Gilbert, 72550 Degré (FR)
(74) Mandataire: Coralis Harle

(56) Documents cités:
- EP-A1- 2 399 453
- GB-A- 2 025 501

## Description

La présente invention concerne le domaine des abris pour animaux, et en particulier des abris pour les animaux d'élevage que sont par exemple les bovins ou les porcins.

### ARRIERE-PLAN TECHNOLOGIQUE

La santé des animaux constitue l'un des aspects décisifs pour le succès d'un élevage.

A cet égard, pour les élevages en extérieur, il est intéressant de prévoir des abris, dénommés encore « niches » ou « igloos », dans lesquels les animaux peuvent se protéger des conditions météorologiques, notamment du froid, du soleil ou de la pluie.

Ce système d'élevage, souvent employé pour les veaux de 0 à 5 mois, permet d'abriter un grand nombre d'animaux sur une exploitation et d'offrir une vue globale sur tout le cheptel. Il présente également l'intérêt de permettre une adaptation rapide de la capacité d'élevage sur l'exploitation.

Comme décrit par exemple dans le document EP-2 399 453, ces abris consistent généralement en une paroi périphérique formée d'une pièce plastique monobloc, formant un toit prolongé par une cloison latérale, délimitant ensemble un espace d'accueil accessible par une ouverture latérale avant.

L'une des attentes avec ce type d'abri est d'offrir une protection efficace à l'encontre des rayonnements solaires, par une réflexion efficace des rayonnements et une opacité optimale, apportant ainsi de l'ombre et de la fraicheur dans l'espace d'accueil pour le bien-être de l'animal.

Pour cela, certains abris sont fabriqués dans une résine de polyester qui est renforcée de fibres de verre. Une couche de gel lisse doit être appliquée sur la surface intérieure, pour protéger les fibres de verre et pour optimiser l'aspect sanitaire.

De tels abris sont intéressants sur le plan de la protection solaire, mais ont l'inconvénient majeur d'être relativement onéreux et complexe à fabriquer notamment du fait des différentes étapes à mettre en oeuvre.

D'autres abris sont fabriqués dans un matériau polymère thermoplastique, tel que le polyéthylène, par une technique de rotomoulage.

Cette approche est intéressante du fait des faibles coûts de revient et de la simplicité de fabrication.

Un pigment adapté est habituellement incorporé dans le matériau polymère thermoplastique afin de lui conférer une propriété de réflexion solaire. Cependant, ce matériau reste relativement transparent, conduisant à un passage important des rayonnements solaires au travers de la paroi périphérique ; cet apport solaire dans l'espace d'accueil est susceptible d'aboutir à des températures excessives pour l'animal.

Dans un domaine technique éloigné des abris pour animaux, on connait par ailleurs du document GB-2 025 501 une structure de toiture à ondulations, comportant deux groupes de pentes orientées dans des directions différentes, l'un desdits groupes de pentes étant réalisé en un matériau réflecteur et/ou opaque, et l'autre groupe de pentes étant réalisé en un matériau adapté pour laisser passer la lumière.

Le but d'une telle structure est d'obtenir un panneau de toiture qui, s'il est correctement positionné par rapport aux rayons du soleil, assure un passage maximum de lumière (au niveau du groupe de pentes laissant passer la lumière), mais limite le passage de chaleur (au niveau du groupe de pentes réalisé en matériau réflecteur et/ou opaque).

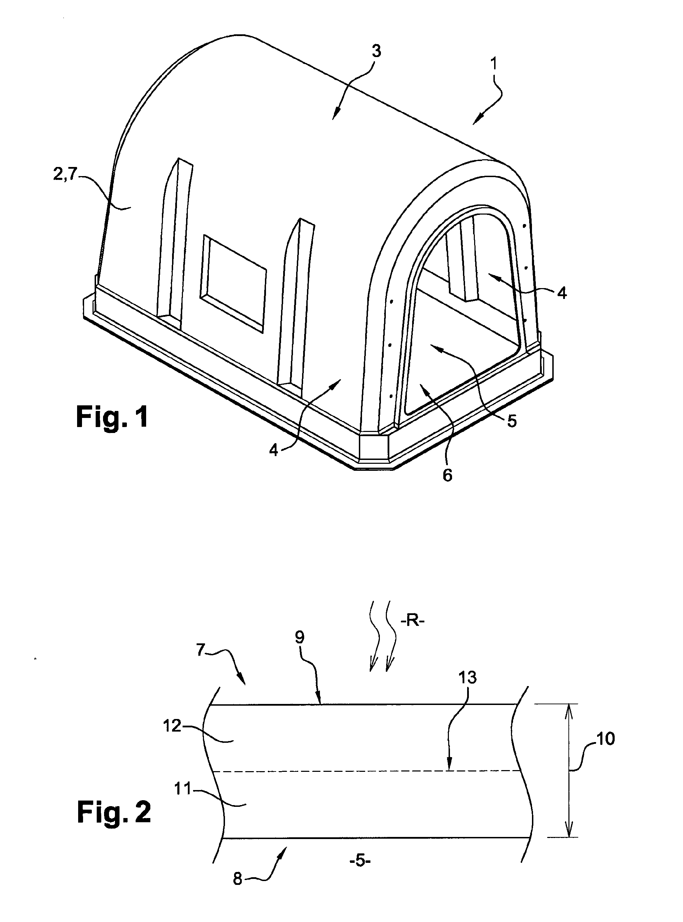

Dans le mode de réalisation illustré sur la figure 2 de ce document GB-2 025 501, la toiture est constituée de tronçons de matière juxtaposés ayant des caractéristiques d'opacité/réflexion différentes. Dans les modes de réalisation des figures 1 et 3, le matériau de base à travers lequel la lumière peut passer est recouvert, par endroits, par un matériau réflecteur et/ou opaque supérieur, orienté vers l'extérieur.

Mais de telles structures de toiture nécessitent une orientation précise par rapport aux rayons du soleil, et elles ne peuvent pas convenir pour des abris pour animaux tels que les niches à veaux qui doivent pouvoir être positionnés à tout endroit, sans tenir compte de leur orientation par rapport au soleil.

De plus, une telle toiture, avec une alternance de zones laissant passer les rayons du soleil et de zones opaques/réflectrices, ne conviendraient pas pour résoudre convenablement le problème de confort mentionné ci-dessus.

Et en outre, la présence d'une matière opaque orientée vers l'extérieur ne permet pas d'obtenir une structure optimisée pour le confort thermique des animaux au sein de l'abri.

Il existe par conséquent un besoin pour un abri qui soit simple à fabriquer et avec un coût de revient limité, tout en offrant des caractéristiques intéressantes de protection pour l'animal à l'encontre des rayonnements solaires, afin d'assurer son confort par régulation de la température au sein de l'espace d'accueil.

### OBJET DE L'INVENTION

Dans ce cadre, l'invention concerne un abri pour animaux, en particulier pour animaux d'élevage, comprenant une paroi périphérique délimitant un espace d'accueil pour l'animal, laquelle paroi périphérique se compose d'au moins une pièce qui est réalisée monobloc dans un matériau polymère thermoplastique et qui comporte deux surfaces opposées, à savoir une surface intérieure située du côté dudit espace d'accueil et une surface extérieure opposée.
Et conformément à l'invention, cet abri est caractérisé par le fait que la pièce précitée comporte au moins deux épaisseurs, à savoir une épaisseur extérieure délimitée par ladite surface extérieure, et une épaisseur intérieure délimitée par ladite surface intérieure, ces épaisseurs intérieure et extérieure présentant des caractéristiques de réflexion solaire et d'opacité solaire qui sont différentes l'une de l'autre pour assurer, d'une part, une réflexion d'au moins une partie des rayonnements solaires au niveau de ladite épaisseur extérieure et, d'autre part, une opacité au niveau de ladite épaisseur intérieure pour empêcher le passage d'au moins une partie desdits rayonnements solaires transmis au travers de ladite épaisseur extérieure.

On obtient ainsi un abri dont l'esthétique est très proche de celle des abris antérieurs, mais qui protège efficacement les animaux contre les rayonnements solaires en limitant leur pénétration dans le volume intérieur. On limite ainsi l'entrée de lumière dans l'abri, ainsi que les montées en température.

D'autres caractéristiques avantageuses, pouvant être prises indépendamment ou en combinaison, sont précisées ci-dessous :
- d'une part, le facteur de réflexion solaire de l'épaisseur extérieure est supérieur au facteur de réflexion solaire de l'épaisseur intérieure et, d'autre part, le facteur d'opacité solaire de l'épaisseur intérieure est supérieur au facteur d'opacité solaire de l'épaisseur extérieure.
- les épaisseurs intérieure et extérieure intègrent chacune au moins un additif, avantageusement un pigment, différents l'une de l'autre, pour leur conférer leurs caractéristiques de réflexion solaire et d'opacité solaire respectives ;
- les épaisseurs extérieure et intérieure présentent chacune une couleur (ou tonalité chromatique), différentes entre elles, pour assurer leurs caractéristiques de réflexion solaire et d'opacité solaire respectives ; dans ce cas et de préférence, la couleur de l'épaisseur extérieure est choisie parmi les couleurs claires, et la couleur de l'épaisseur intérieure est choisie parmi les couleurs sombres ; encore de préférence, l'épaisseur extérieure est de couleur blanche, ou au moins approximativement blanche, et l'épaisseur intérieure est de couleur noire, ou au moins approximativement noire ;

- la pièce ou les pièces constitutives de la paroi périphérique comportent uniquement lesdites épaisseurs intérieure et extérieure (qui constituent par exemple chacune la moitié, ou au moins approximativement la moitié, de l'épaisseur totale de ladite ou desdites pièces) ;
- la ou les pièces sont réalisées monobloc dans un matériau polymère thermoplastique choisi parmi les matériaux adaptés aux procédés de fabrication par technique de rotomoulage, avantageusement le polyéthylène ;
- la paroi périphérique est de préférence constituée d'une unique pièce réalisée monobloc et comportant les deux épaisseurs intérieure et extérieure sur l'intégralité de sa surface.

La présente invention concerne également un procédé pour la fabrication par rotomoulage d'une pièce constitutive de la paroi périphérique d'un abri pour animaux tel que défini ci-dessus, lequel procédé comprend les étapes successives de chargement d'un matériau polymère thermoplastique dans un moule, de chauffage dudit matériau polymère thermoplastique dans ledit moule mis en mouvement, et de refroidissement, suivi du démoulage de ladite pièce obtenue, lequel procédé consiste à introduire au moins deux additifs différents au sein dudit matériau polymère thermoplastique :
- un premier additif, avant ou lors du chargement dudit matériau ou en début de chauffage, destiné à définir les caractéristique de réflexion solaire et d'opacité solaire de l'épaisseur extérieure de ladite pièce, et
- un second additif, au cours du chauffage, destiné à définir les caractéristiques de réflexion solaire et d'opacité solaire de l'épaisseur intérieure de la pièce.

Dans ce cadre, le second additif est avantageusement introduit au milieu, ou au moins approximativement au milieu, de l'étape de chauffage.

Ces additifs contiennent avantageusement des pigments destinés à définir les caractéristiques de réflexion solaire et d'opacité solaire des épaisseurs de paroi dans lesquelles ils sont introduits.

### DESCRIPTION DETAILLEE DE L'INVENTION

La présente invention est encore illustrée, sans être aucunement limitée, par la description suivante d'un mode de réalisation particulier en relation avec les dessins annexés dans lesquels :
- la figure 1 est une vue générale et en perspective d'un abri pour animaux selon l'invention, et
- la figure 2 représente, schématiquement, une vue partielle et en coupe de la pièce monobloc constituant la paroi périphérique de l'abri selon la figure 1.

L'abri 1 pour animaux, tel que représenté sur la figure 1, est couramment désigné sous le nom de « niche » ou « igloo » ; il est destiné à équiper une exploitation agricole, en particulier pour l'élevage de veaux ou de porcins.

Cet abri 1 consiste en une structure mobile, déplaçable, qui présente une forme générale classique en soi ; il peut notamment être associé à des barrières (non représentées), pour former ensemble un enclos.

Un tel abri 1 comprend ainsi une paroi périphérique 2 formant un toit 3 prolongé par une cloison latérale 4 destinée à reposer sur le sol, directement ou par l'intermédiaire d'un piètement.

Cette paroi périphérique 2 délimite un espace d'accueil 5 qui est dimensionné pour recevoir un ou plusieurs animaux.

Une ouverture avant 6 est ménagée au sein de la cloison latérale 4 pour l'accès des animaux à cet espace d'accueil 5.

La paroi périphérique 2 est constituée ici par une unique pièce 7, réalisée monobloc dans un matériau polymère thermoplastique. De manière alternative, cette paroi périphérique 2 pourrait être constituée par l'assemblage de plusieurs pièces réalisées chacune monobloc dans ce matériau polymère thermoplastique.

Le matériau polymère thermoplastique est avantageusement choisi parmi les matériaux adaptés aux procédés de fabrication par technique de rotomoulage détaillée ci-après. Ce matériau polymère thermoplastique est ainsi par exemple le polyéthylène (désigné couramment sous le sigle « PE »).

La pièce 7, constituant la paroi périphérique 2, présente ici une structure intrinsèque particulière, qui est décrite en détails ci-dessous en relation avec la figure 2.

Cette pièce 7 comporte deux surfaces opposées 8 et 9, définissant son épaisseur générale 10, à savoir :
- une surface intérieure 8, située du côté de l'espace d'accueil 5 et délimitant cet espace 5 sur une partie au moins de son pourtour, et
- une surface extérieure 9 opposée, amenée à recevoir notamment les rayonnements solaires R.

Cette pièce 7 est structurée pour assurer :
- une réflexion d'au moins une partie des rayonnements solaires R du côté de la surface extérieure 9, et
- une opacité du côté de la surface intérieure 8.

De manière générale, le rayonnement solaire est en partie transmis, absorbé ou réfléchi par la pièce 7.

Par « réflexion solaire », on entend le facteur mesurant la proportion de rayonnement solaire réfléchi ; une valeur élevée indique une bonne réflexion de l'énergie solaire.
Le facteur de réflexion solaire exprime ainsi, par un nombre compris entre 0 et 1, le pourcentage de l'énergie radiante incidente réfléchie.

Par « opacité » ou « opacité solaire », on entend le facteur mesurant la proportion entre le rayonnement solaire incident et le rayonnement solaire transmis ; une valeur élevée indique une barrière importante au passage des rayonnements solaires.

Le facteur d'opacité solaire exprime ainsi, par un nombre compris entre 0 et 1, le pourcentage des rayonnements arrêtés, notamment par réflexion ou par absorption.

Par « absorption solaire », on entend le facteur mesurant la proportion de rayonnement solaire absorbé ; une valeur élevée indique une absorption importante de l'énergie solaire.

Le facteur d'absorption solaire exprime ainsi, par un nombre compris entre 0 et 1, le pourcentage de l'énergie radiante incidente absorbée. Le reste du rayonnement solaire est, soit réfléchi, soit transmis (grâce à la transparence du matériau).

Pour cela, selon l'invention, l'épaisseur générale 10 de la pièce 7 se divise en deux épaisseurs superposées, l'une intérieure 11 et l'autre extérieure 12, qui présentent des caractéristiques de réflexion solaire et d'opacité solaire qui sont différentes l'une de l'autre.

Plus précisément, l'épaisseur intérieure 11 est délimitée par ladite surface intérieure 8, et l'épaisseur extérieure 12 est délimitée par ladite surface extérieure 9. Ces épaisseurs intérieure 11 et extérieure 12 sont monoblocs, et sont raccordées par une zone interface 13 (cette zone interface 13 est représentée schématiquement par un trait discontinu, uniquement à titre d'illustration).

Cette pièce 7 comporte ainsi des épaisseurs intérieure 11 et extérieure 12 qui forment une structure continue et monobloc entre ses deux surfaces 8, 9. L'interface 13 consiste ainsi en une sorte de zone de transition, plus ou moins épaisse, qui est ménagée entre ces épaisseurs intérieure 11 et extérieure 12.

Les épaisseurs intérieure 11 et extérieure 12 présentent des caractéristiques visant à assurer :
- une réflexion d'au moins une partie des rayonnements solaires R au niveau de ladite épaisseur extérieure 12, et
- un blocage par ladite épaisseur intérieure 11 d'au moins une partie desdits rayonnements solaires R transmis au travers de ladite épaisseur extérieure 12 (de préférence la totalité ou au moins quasiment la totalité des rayonnements solaires R transmis).

Ainsi et de préférence, le facteur de réflexion solaire de l'épaisseur extérieure 12 est supérieur au facteur de réflexion solaire de l'épaisseur intérieure 11, pour assurer une réflexion maximale de rayonnement solaire au niveau de cette épaisseur extérieure 12.

En outre, le facteur d'opacité solaire de l'épaisseur intérieure 11 est supérieur au facteur d'opacité solaire de l'épaisseur extérieure 12, de sorte que ladite épaisseur intérieure 11 bloque au maximum les rayonnements solaires R transmis au travers de ladite épaisseur extérieure 12.

Cette épaisseur intérieure 11 est ainsi opaque, ou pratiquement opaque.

A cet effet, selon un mode de réalisation préféré de l'invention, les épaisseurs intérieure 11 et extérieure 12 intègrent chacune au moins un additif, différents l'une de l'autre, pour leur conférer leurs caractéristiques de réflexion solaire et d'opacité solaire respectives.

Ces additifs consistent avantageusement en des pigments (ou colorants), de sorte à conférer des couleurs différentes (en particulier des tonalités chromatiques et clartés différentes) à chacune des épaisseurs extérieure 12 et intérieure 11 de la pièce 7.

La couleur de l'épaisseur extérieure 12 est de préférence choisie parmi les couleurs claires, présentant ainsi un facteur de réflexion solaire élevé (avantageusement supérieur à 0,5 et encore de préférence supérieur à 0,7).

Par exemple, le facteur de réflexion solaire est de 0,82 pour le blanc et de 0,66 pour le jaune.

Cette couleur claire consiste avantageusement en la couleur blanche, ou une couleur au moins approximativement blanche.

La couleur de l'épaisseur intérieure 11 est quant à elle de préférence choisie parmi les couleurs sombres ou foncées.

Cette couleur présente ainsi un facteur d'opacité solaire élevé (avantageusement supérieur à 0,5 et de préférence supérieur à 0,7).

Sans être lié par une quelconque théorie, ce facteur d'opacité est principalement issu du facteur d'absorption solaire qui est par exemple de 0,88 pour le vert sombre, de 0,91 pour le bleu foncé et de 0,94 pour le noir.

Cette couleur sombre/foncée consiste avantageusement en la couleur noire, ou une couleur au moins approximativement noire (par exemple le gris foncé).

L'épaisseur générale 10 de la pièce 7, entre ses deux surfaces 8 et 9, est par exemple de l'ordre de quelques millimètres (par exemple de 2 à 10 mm).

Les épaisseurs intérieure 11 et extérieure 12 ont avantageusement des épaisseurs (ou largeurs) identiques, ou au moins approximativement identiques, l'une par rapport à l'autre. Ces épaisseurs 11 et 12 forment ainsi chacune la moitié, ou au moins approximativement la moitié, de ladite épaisseur générale 10.

De manière alternative, l'épaisseur extérieure 12 est avantageusement plus épaisse que l'épaisseur intérieure 11. Par exemple, l'épaisseur extérieure 12 représente les 2/3, voire les 3/4, de l'épaisseur générale 10 ; l'épaisseur intérieure 11 représente ainsi quant à elle 1/3, voire 1/4, de l'épaisseur générale 10.

De manière générale, l'abri 1 ainsi obtenu a l'intérêt d'offrir simultanément un confort thermique (en limitant les montées en température), et un confort lumineux (en limitant l'entrée de lumière) pour les animaux venant se placer au sein de l'espace d'accueil 5, cela au moyen d'un matériau facile à produire, monobloc et particulièrement résistant aux conditions météorologiques.

Un tel abri 1 est avantageusement obtenu par la mise en oeuvre d'un procédé de rotomoulage.

Un tel procédé commence par le chargement du matériau polymère thermoplastique dans un moule dont la forme est appropriée à la pièce 7 souhaitée.

Ce matériau polymère thermoplastique se présente sous une forme de poudre, dont la quantité introduite est fonction de l'épaisseur totale 10 souhaitée pour la pièce 7.

Une fois chargé et fermé, le moule tourne suivant deux axes orthogonaux pendant une phase de chauffage.

Le matériau polymère thermoplastique fond progressivement pour constituer progressivement la pièce 7, depuis sa surface extérieure 9 jusqu'à sa surface intérieure 8.

Des additifs sont introduits successivement au sein dudit matériau polymère thermoplastique pour obtenir les deux épaisseurs 11 et 12 constitutives.

Un premier additif est mélangé avec le matériau, avant ou lors du chargement, voire en début de chauffage.

Il est apporté dans une quantité appropriée pour sa dispersion, au moins approximativement homogène, au sein de l'épaisseur extérieure 12 formée en premier.

Ce premier additif est choisi pour définir les caractéristique de réflexion solaire et d'opacité solaire de cette épaisseur extérieure 12.

Un second additif est introduit au cours du chauffage, lorsque l'épaisseur extérieure 12 est formée.

Il est apporté dans une quantité appropriée pour sa dispersion, au moins approximativement homogène, au sein de l'épaisseur intérieure 11 formée en second.

Ce second additif est introduit pour définir les caractéristiques de réflexion solaire et d'opacité solaire de l'épaisseur intérieure 11.

Ce second additif est introduit à un moment intermédiaire déterminé de l'étape de chauffage, en particulier au milieu, ou au moins approximativement au milieu, de cette étape.

En pratique, ces additifs contiennent avantageusement des pigments destinés à définir les couleurs respectives des épaisseurs 11 et 12 de la pièce 7, pour assurer leurs caractéristiques respectives de réflexion solaire et d'opacité solaire tels que développées précédemment en relation avec la figure 2.

Une fois la pièce 7 formée, cette dernière est ensuite refroidie puis démoulée.

La pièce 7 obtenue, formant avantageusement la paroi périphérique 2 de l'abri 1, est telle que décrite ci-dessus en relation avec la figure 2, comportant ses épaisseurs extérieure 12 et intérieure 11.

Ce procédé de fabrication permet l'obtention d'une pièce monobloc 7, comportant les deux épaisseurs 11 et 12 dans une même matière polymère thermoplastique monobloc.
Cette pièce 7 est en plus obtenue par l'adaptation d'une technique éprouvée de rotomoulage, ce qui permet une maitrise de ses coûts.

## Revendications

1. Abri pour animaux, en particulier pour animaux d'élevage, comprenant une paroi périphérique (2) délimitant un espace d'accueil (5) pour l'animal, laquelle paroi périphérique (2) se compose d'au moins une pièce (7) qui est réalisée monobloc dans un matériau polymère thermoplastique et qui comporte deux surfaces opposées, à savoir une surface intérieure (8) située du côté dudit espace d'accueil (5) et une surface extérieure (9) opposée,
**caractérisé en ce que** ladite pièce (7) comporte au moins deux épaisseurs (11, 12), à savoir une épaisseur extérieure (12) délimitée par ladite surface extérieure (9), et une épaisseur intérieure (11) délimitée par ladite surface intérieure (8),
lesquelles épaisseurs intérieure (11) et extérieure (12) présentent des caractéristiques de réflexion solaire et d'opacité solaire qui sont différentes l'une de l'autre pour assurer, d'une part, une réflexion d'au moins une partie des rayonnements solaires (R) au niveau de ladite épaisseur extérieure (12) et, d'autre part, une opacité au niveau de ladite épaisseur intérieure (11) afin d'empêcher le passage d'au moins une partie desdits rayonnements solaires (R) transmis au travers de ladite épaisseur extérieure (12).

2. Abri pour animaux selon la revendication 1, **caractérisé en ce que**, d'une part, le facteur de réflexion solaire de l'épaisseur extérieure (12) est supérieur au facteur de réflexion solaire de l'épaisseur intérieure (11) et, d'autre part, le facteur d'opacité solaire de l'épaisseur intérieure (11) est supérieur au facteur d'opacité solaire de l'épaisseur extérieure (12).

3. Abri pour animaux selon l'une quelconque des revendications 1 ou 2, **caractérisé en ce que** les épaisseurs intérieure (11) et extérieure (12) intègrent chacune au moins un additif, différents l'une de l'autre, pour leur conférer leurs caractéristiques de réflexion solaire et d'opacité solaire respectives.

4. Abri pour animaux selon l'une quelconque des revendications 1 à 3, **caractérisé en ce que** les épaisseurs extérieure (12) et intérieure (11) présentent chacune une couleur, différentes entre elles, pour assurer leurs caractéristiques de réflexion solaire et d'opacité solaire respectives.

5. Abri pour animaux selon la revendication 4, **caractérisé en ce que** la couleur de l'épaisseur extérieure (12) est choisie parmi les couleurs claires, et **en ce que** la couleur de l'épaisseur intérieure (11) est choisie parmi les couleurs sombres.

6. Abri pour animaux selon la revendication 5, **caractérisé en ce que** l'épaisseur extérieure (12) est de couleur blanche, ou au moins approximativement blanche, et **en ce que** l'épaisseur intérieure (11) est de couleur noire, ou au moins approximativement noire.

7. Abri pour animaux selon l'une quelconque des revendications 1 à 6, **caractérisé en ce que** la pièce ou les pièces (7) constitutives de la paroi périphérique (2) comportent chacune uniquement lesdites épaisseurs intérieure (11) et extérieure (12).

8. Abri pour animaux selon l'une quelconque des revendications 1 à 7, **caractérisé en ce que** la ou les pièces (7) sont réalisées monobloc dans un matériau polymère thermoplastique choisi parmi les matériaux adaptés aux procédés de fabrication par rotomoulage, avantageusement le polyéthylène.

9. Abri pour animaux selon l'une quelconque des revendications 1 à 8, **caractérisé en ce que** sa paroi périphérique est constituée d'une unique pièce (7) réalisée monobloc et comportant lesdites deux épaisseurs intérieure (11) et extérieure (12) sur l'intégralité de sa surface.

10. Procédé pour la fabrication par rotomoulage d'une pièce (7) constitutive de la paroi périphérique (2) d'un abri (1) pour animaux selon l'une quelconque des revendications 1 à 9, lequel procédé comprend les étapes successives suivantes :
- le chargement d'un matériau polymère thermoplastique dans un moule,
- le chauffage dudit matériau polymère thermoplastique dans ledit moule mis en mouvement,
- le refroidissement et le démoulage de ladite pièce (7) obtenue,
**caractérisé en ce qu'il** consiste à introduire au moins deux additifs différents au sein dudit matériau polymère thermoplastique :
- un premier additif, avant ou lors du chargement dudit matériau, ou en début de chauffage, destiné à définir les caractéristique de réflexion solaire et d'opacité solaire de l'épaisseur extérieure (12) de ladite pièce (7), et
- un second additif, au cours du chauffage, destiné à définir les caractéristiques de réflexion solaire et d'opacité solaire de l'épaisseur intérieure (11) de la pièce (7).

11. Procédé selon la revendication 10, **caractérisé en ce que** le second additif est introduit au milieu, ou au moins approximativement au milieu, de l'étape de chauffage.

12. Procédé selon l'une quelconque des revendications 10 ou 11, **caractérisé en ce que** les additifs contiennent des pigments destinés à définir les caractéristiques de réflexion solaire et d'opacité solaire des épaisseurs (11, 12) respectives.

## Patentansprüche

1. Schutzhütte für Tiere, insbesondere für Zuchttiere, umfassend eine Umfangswand (2), die einen Aufnahmeraum (5) für das Tier begrenzt, wobei die Umfangswand (2) aus mindestens einem Teil (7) besteht, das einstückig aus einem thermoplastischen Polymermaterial hergestellt ist und zwei gegenüberliegende Flächen umfasst, nämlich eine Innenfläche (8), die sich auf der Seite des Aufnahmeraums (5) befindet, und eine gegenüberliegende Außenfläche (9),
**dadurch gekennzeichnet, dass** der Teil (7) mindestens zwei Dicken (11, 12) umfasst, nämlich eine äußere Dicke (12), die von der Außenfläche (9) begrenzt ist, und eine innere Dicke (11), die von der Innenfläche (8) begrenzt ist,
wobei die innere (11) und die äußere Dicke (12) Merkmale der Sonnenreflexion und der Sonnenundurchlässigkeit aufweisen, die unterschiedlich sind, um einerseits eine Reflexion zumindest eines Teils der Sonnenstrahlen (R) im Bereich der äußeren Dicke (12) und andererseits eine Undurchlässigkeit im Bereich der inneren Dicke (11) zu gewährleisten, um den Durchgang zumindest eines Teils der Sonnenstrahlen (R), der durch die äußere Dicke (12) übertragen wird, zu verhindern.

2. Schutzhütte für Tiere nach Anspruch 1, **dadurch gekennzeichnet, dass** einerseits der Sonnenreflexionsfaktor der äußeren Dicke (12) größer als der Sonnenreflexionsfaktor der inneren Dicke (11) ist, und andererseits der Sonnenundurchlässigkeitsfaktor der inneren Dicke (11) größer als der Sonnenundurchlässigkeitsfaktor der äußeren Dicke (12) ist.

3. Schutzhütte für Tiere nach einem der Ansprüche 1 oder 2, **dadurch gekennzeichnet, dass** die innere (11) und die äußere Dicke (12) jeweils mindestens einen Zusatzstoff, die zueinander unterschiedlich sind, umfassen, um ihnen ihre Merkmale der Sonnenreflexion bzw. der Sonnenundurchlassigkeit zu verleihen.

4. Schutzhütte für Tiere nach einem der Ansprüche 1 bis 3, **dadurch gekennzeichnet, dass** die äußere (12) und die innere Dicke (11) jeweils eine Farbe, die zueinander unterschiedlich sind, aufweisen, um ihre Merkmale der Sonnenreflexion bzw. der Sonnenundurchlassigkeit zu gewährleisten.

5. Schutzhütte für Tiere nach Anspruch 4, **dadurch gekennzeichnet, dass** die Farbe der äußeren Dicke (12) unter den hellen Farben ausgewählt ist, und dass die Farbe der inneren Dicke (11) unter den dunklen Farben ausgewählt ist.

6. Schutzhütte für Tiere nach Anspruch 5, **dadurch gekennzeichnet, dass** die äußere Dicke (12) von weißer oder zumindest annähernd weißer Farbe ist, und dass die innere Dicke (11) von schwarzer oder zumindest annähernd schwarzer Farbe ist.

7. Schutzhütte für Tiere nach einem der Ansprüche 1 bis 6, **dadurch gekennzeichnet, dass** der Teil oder die Teile (7), aus denen die Umfangswand (2) besteht, jeweils nur die innere (11) und die äußere Dicke (12) umfassen.

8. Schutzhütte für Tiere nach einem der Ansprüche 1 bis 7, **dadurch gekennzeichnet, dass** der oder die Teile (7) einstückig aus einem thermoplastischen Polymermaterial hergestellt sind, das unter den Materialien, die für die Herstellungsverfahren durch Rotationsformen geeignet sind, ausgewählt ist, vorzugsweise Polyethylen.

9. Schutzhütte für Tiere nach einem der Ansprüche 1 bis 8, **dadurch gekennzeichnet, dass** ihre Umfangswand aus einem einzigen Teil (7) besteht, der einstückig hergestellt ist und die innere (11) und die äußere Dicke (12) beide auf seiner gesamten Fläche umfasst.

10. Verfahren zur Herstellung eines Teils (7) durch Rotationsformen, aus dem die Umfangswand (2) einer Schutzhütte (1) für Tiere besteht, nach einem der Ansprüche 1 bis 9, wobei das Verfahren nacheinander die folgenden Schritte umfasst:
- Einfüllen eines thermoplastischen Polymermaterials in eine Form,
- Erhitzen des thermoplastischen Polymermaterials in der in Bewegung versetzten Form,
- Abkühlen und Entformen des erhaltenen Teils (7),
**dadurch gekennzeichnet, dass** es darin besteht, mindestens zwei unterschiedliche Zusatzstoffe in das thermoplastische Polymermaterial einzuführen:
- einen ersten Zusatzstoff vor oder beim Einfüllen des Materials oder am Anfang der Erhitzung, der dazu bestimmt ist, die Merkmale der Sonnenreflexion und der Sonnenundurchlässigkeit der äußeren Dicke (12) des Teils (7) zu definieren, und
- einen zweiten Zusatzstoff während des Erhitzens, der dazu bestimmt ist, die Merkmale der Sonnenreflexion und der Sonnenundurchlässigkeit der inneren Dicke (11) des Teils (7) zu definieren.

11. Verfahren nach Anspruch 10, **dadurch gekennzeichnet, dass** der zweite Zusatzstoff in der Mitte oder zumindest annähernd in der Mitte des Erhitzungsschrittes eingeführt wird.

12. Verfahren nach einem der Ansprüche 10 oder 11, **dadurch gekennzeichnet, dass** die Zusatzstoffe Pigmente enthalten, die dazu bestimmt sind, die Merkmale der Sonnenreflexion und der Sonnenundurchlässigkeit der jeweiligen Dicken (11, 12) zu definieren.

## Claims

1. An animal shelter, in particular for livestock animals, comprising a peripheral wall (2) delimiting an accommodation room (5) for the animal, which peripheral wall (2) is consisted of at least one part (7) that is made single-piece from a thermoplastic polymer material and that includes two opposite surfaces, i.e. an inner surface (8) located on the side of said accommodation room (5) and an opposite outer surface (9),
**characterized in that** said part (7) includes at least two thicknesses (11, 12), i.e. an outer thickness (12) delimited by said outer surface (9), and an inner thickness (11) delimited by said inner surface (8),
which inner (11) and outer (12) thicknesses have solar reflection and solar opacity characteristics that are different from each other to ensure, on the one hand, a reflection of at least one part of the solar radiations (R) at said outer thickness (12), and on the other hand, an opacity at said inner thickness (11) so as to inhibit the passage of at least one part of said solar radiations (R) transmitted through said outer thickness (12).

2. The animal shelter according to claim 1, **characterized in that**, on the one hand, the solar reflection factor of the outer thickness (12) is higher than the solar reflection factor of the inner thickness (11), and on the other hand, the solar opacity factor of the inner thickness (11) is higher than the solar opacity factor of the outer thickness (12).

3. The animal shelter according to any one of claims 1 or 2, **characterized in that** the inner (11) and outer (12) thicknesses each integrate at least one additive, different from each other, to provide them with respective solar reflection and solar opacity characteristics.

4. The animal shelter according to any one of claims 1 to 3, **characterized in that** the outer (12) and inner (11) thicknesses each have a colour, different from each other, to ensure their respective solar reflection and solar opacity characteristics.

5. The animal shelter according to claim 4, **characterized in that** the colour of the outer thickness (12) is chosen among the light colours, and **in that** the colour of the inner thickness (11) is chosen among the dark colours.

6. The animal shelter according to claim 5, **characterized in that** the outer thickness (12) is of white, or at least approximately white, colour, and **in that** the inner thickness (11) is of black, or at least approximately black, colour.

7. The animal shelter according to any one of claims 1 to 6, **characterized in that** the part(s) (7) constitutive of the peripheral wall (2) each include only said inner (11) and outer (12) thicknesses.

8. The animal shelter according to any one of claims 1 to 7, **characterized in that** the part(s) (7) are made single-piece from a thermoplastic polymer material chosen among the materials adapted for the rotational-moulding manufacturing processes, advantageously polyethylene.

9. The animal shelter according to any one of claims 1 to 8, **characterized in that** its peripheral wall is consisted of a single part (7) made single-piece and comprising said two inner (11) and outer (12) thicknesses over its whole surface.

10. A method for manufacturing by rotational moulding a part (7) constitutive of the peripheral wall (2) of an animal shelter (1) according to any one of claims 1 to 9, which method comprises the following successive steps:
- loading a thermoplastic polymer material in a mould,
- heating said thermoplastic polymer material in said mould set in motion,
- cooling and unmoulding said obtained part (7), **characterized in that** it consists in introducing at least two different additives within said thermoplastic polymer material:
- a first additive, before or during the loading of said material, or at the beginning of the heating, intended to define the solar reflection and solar opacity characteristics of the outer thickness (12) of said part (7), and
- a second additive, during the heating, intended to define the solar reflection and solar opacity characteristics of the inner thickness (11) of said part (7).

11. The method of claim 10, **characterized in that** the second additive in introduced in the middle, or approximately the middle, of the heating step.

12. The method according to any one of claims 10 or 11, **characterized in that** the additives contain pigments intended to define the solar reflection and solar opacity characteristics of the respective thicknesses (11, 12).
